# EUROPÄISCHE PATENTSCHRIFT

(11) **EP 1 369 672 B1**
(45) Veröffentlichungstag und Bekanntmachung des Hinweises auf die Patenterteilung: **29.07.2009**
(21) Anmeldenummer: 03003964.8
(22) Anmeldetag: 22.02.2003
(51) Int. Cl.: G01F 5/00, G01F 1/40, G01F 1/684

(54) **Durchfluss-Messvorrichtung mit Druckabfall-Erzeugungsmittel**
Mass flow measurement device using pressure loss inducers
Débitmètre avec moyens de production de perte de pression

(30) Priorität: 05.06.2002 DE 20208716 U
(43) Veröffentlichungstag der Anmeldung: 10.12.2003
(73) Patentinhaber: FESTO AG & Co. KG, 73734 Esslingen (DE)
(72) Erfinder: Hirt, Peter, Dr., 8702 Zollikon (CH); Koller, Gérald, 8600 Dübendorf (CH)
(74) Vertreter: Abel, Martin

(56) Entgegenhaltungen:
- WO-A-01/61282
- US-B1- 6 322 247
- SCHUBAUER G.B., SPANGENBERG W.G. & KLEBANOFF P.S.: "Aerodynamic characteristics of damping screens" NACA TECHNICAL NOTE 2001, 31. Januar 1950 (1950-01-31), XP002253836 WASHINGTON

## Beschreibung

Die Erfindung betrifft eine Durchfluß-Messvorrichtung, bei der in einem mit einem Einlaß und einem Auslaß versehenen Haupt-Strömungskanal einen Druckabfall des hindurchströmenden Druckmediums hervorrufende Druckabfall-Erzeugungsmittel vorgesehen sind, wobei in den Haupt-Strömungskanal zum Anschließen von Durchfluß-Erfassungsmitteln im Bereich der Druckabfall-Erzeugungsmittel mindestens ein erster Abgriffskanal und stromab von diesem mindestens ein zweiter Abgriffskanal einmündet und wobei den Druckabfall-Erzeugungsmitteln stromauf mit Abstand eine zur Vergleichmäßigung der Druckmedium-Strömung dienende Siebanordnung vorgelagert ist.

Bei einer aus der US 5,750,892 bekannten Durchfluß-Messvorrichtung dieser Art ist in den zwischen dem Einlaß und dem Auslaß verlaufenden Haupt-Strömungskanal ein Laminar-Flow-Element (LFE) eingeschaltet, das eine Vielzahl von Kapillarkanälen enthält, bei deren Durchströmen ein Druckabfall auftritt. Zwei mit Abstand zueinander im Bereich des Laminar-Flow-Elements einmündende Abgriffskanäle bilden einen Meßkanal, in dem sich in Folge der Druckdifferenz eine By-pass-Strömung ausbildet, deren Durchfluß mittels einer Massenstrom-Sensoreinrichtung erfaßt werden kann. Auf Basis der Meßwerte läßt sich die Durchflußrate im Haupt-Strömungskanal ermitteln.

Da das Druckmedium am Einlaß über einen relativ kleinen Querschnitt zuströmt, sind Maßnahmen vorgesehen, die bewirken sollen, dass das Druckmedium im Bereich der Einmündungen der Abgriffskanäle den zur Verfügung gestellten Strömungsquerschnitt nach außen bis zur Kanalwandung hin ausfüllt, so dass Messwertverfälschungen ausgeschlossen werden. Diese Maßnahmen enthalten eine dem Laminar-Flow-Element stromauf mit Abstand vorgelagerte Siebanordnung und ein in dem Zwischenraum zwischen dem Laminar-Flow-Element und der Siebanordnung platziertes Konuselement. Die Siebanordnung dient zur Vergleichmäßigung der Strömung. Das Konuselement lenkt die Strömung radial nach außen, so dass das Laminar-Flow-Element mit einer ringförmigen Strömungsverteilung durchströmt wird. Letzteres hat allerdings den Nachteil, dass der Strömungsquerschnitt des Haupt-Strömungskanals schon vor der Einmündung des ersten Abgriffskanals verengt werden muß, um eine Laminarisierung zu erzielen. Die Folge ist ein relativ großer, bleibender Druckabfall über das Gerät hinweg auf Grund des geringen Querschnittes. Zudem bildet sich auch vor der Siebanordnung bereits ein Strömungsrückstau aus, da das Druckmedium im zentralen Bereich der Siebanordnung durch das sich unmittelbar anschließende Konuselement an einem Hindurchströmen durch die Siebanordnung gehindert wird.

Würde man alternativ auf die geschilderten Maßnahmen verzichten, müßte der Haupt-Strömungskanal vor dem Laminar-Flow-Element mit einem relativ langen Einlaufabschnitt versehen werden, der der Strömung des Druckmediums ausreichend Kanallänge zur Verfügung stellt, um sich über den gesamten Kanalquerschnitt auszubreiten. Dies hätte jedoch eine relativ große Baulänge der gesamten Meßvorrichtung zur Folge.

Aus der WO 01/61282 ist eine Durchflussmessvorrichtung mit einem zwischen Ein- und Auslaß konstanten Querschnitt bekannt, die alle Merkmale des Oberbegriffs von Anspruch 1 enthält.

Die Aufgabe der vorliegenden Erfindung besteht darin, eine Durchfluß-Messvorrichtung zu schaffen, die bei kompakten Längenabmessungen über eine hohe Meßgenauigkeit verfügt.

Zur Lösung dieser Aufgabe ist in Verbindung mit den eingangs genannten Merkmalen vorgesehen, dass die Siebanordnung mehrere in Längsrichtung des Haupt-Strömungskanals mit Abstand aufeinanderfolgend angeordnete Siebscheiben enthält.

Überraschend hat sich gezeigt, dass bei einer Realisierung der Siebanordnung mit mehreren in Strömungsrichtung beabstandeten Siebscheiben nicht nur eine Vergleichmäßigung des Strömungsprofils des Druckmediums auftritt, sondern - im Zwischenraum zwischen unmittelbar aufeinanderfolgenden Siebscheiben - gleichzeitig eine Verbreiterung des aktuellen Strömungsquerschnittes. Bereits mit nur zwei beabstandeten Siebscheiben tritt eine merkliche Strömungserweiterung auf, wobei der Effekt mit einer noch größeren Anzahl von Siebscheiben weiter optimiert wird. Als zweckmäßig hat es sich herausgestellt, die Siebanordnung mit mindestens vier aufeinanderfolgenden Siebscheiben auszustatten, wobei derzeit als optimal eine Anzahl von sechs Siebscheiben angesehen wird. Eine weitere Vergrößerung der Anzahl hätte zwar eine weitere marginale Verbesserung der Strömungsausbreitung zur Folge, ginge aber zu Lasten der Baulänge der Gesamtanordnung. Da zwischen der Siebanordnung und den Druckabfall-Erzeugungsmitteln der gesamte Kanalquerschnitt des Haupt-Strömungskanals als Strömungsquerschnitt zur Verfügung steht, trägt auch dieser Bereich zur Ausbreitung des Strömungsquerschnittes bei und kann zudem für den ersten Messwerteabgriff herangezogen werden, so dass man nicht zwingend auf einen Abgriff innerhalb der Druckabfall-Erzeugungsmittel angewiesen ist. Trotz sehr kompakter Längenabmessungen kann mit der Durchfluß-Messvorrichtung eine sehr präzise Durchflußmessung vorgenommen werden. Darüber hinaus ist sie weitgehend unabhängig vom Querschnitt der das Fluid zuführenden Fluidleitung.

Es ist zwar aus der EP 0 075 343 B1 bereits bekannt, im Zusammenhang mit einer Durchfluß-Messvorrichtung auf eine Siebanordnung mit mehreren aufeinanderfolgend angeordneten Siebscheiben zurückzugreifen. Die Siebanordnung dient dort jedoch nur zur Bildung eines Laminar-Flow-Elements, dem keinerlei Mittel vorgeschaltet sind, um den Strömungsquerschnitt des einströmenden Druckmediums zu verbreitern. Dem entsprechend hat der Haupt-Strömungskanal stromauf des Laminar-Flow-Elements ein relativ große Baulänge. In der EP 0 075 343 B1 findet sich kein Hinweis darauf, mehrere axial beabstandete Siebscheiben vor einem Laminar-Flow-Element zu plazieren, um auf kurzer Wegstrecke eine effektive Verbreiterung des Strömungsprofils hervorzurufen.

Vorteilhafte Weiterbildungen der Erfindung gehen aus den Unteransprüchen hervor.

Eine sehr hohe Meßgenauigkeit ergibt sich, wenn der erste Abgriffskanal stromauf vor den Druckabfall-Erzeugungsmitteln in den Haupt-Strömungskanal einmündet. Dadurch wird das Vorherrschen eines reduzierten Druckes schon an der ersten Meßstelle verhindert.

Zweckmäßigerweise liegen beide Abgriffskanäle außerhalb der Durchfluß-Erfassungsmittel, wobei der erste Abgriffskanal stromauf vorgelagert und der zweite Abgriffskanal stromab nachgeordnet ist.

Die Druckabfall-Erzeugungsmittel können beispielsweise von einer Blende oder - wenn das Erzeugen einer laminaren Störung besonders relevant ist - von einem Laminar-Flow-Element gebildet sein.

Die Durchflußerfassungsmittel können die Durchflußwerte beispielsweise auf Basis einer Differenzdruck-Messung oder einer Massenstrom-Messung erfassen.

Die Abstände zwischen den aufeinanderfolgenden Siebscheiben der Siebanordnung sind untereinander zweckmäßigerweise gleich. Zur Vorgabe des jeweiligen Abstandes kann zwischen unmittelbar aufeinanderfolgenden Siebscheiben jeweils ein entsprechender Distanzring vorgesehen sein.

Wenn die Siebanordnung Bestandteil einer koaxial in den Haupt-Strömungskanal eingesetzten Siebpatrone ist, ist eine sehr einfache Installation möglich und kann bei Bedarf ein rascher Austausch erfolgen, beispielsweise zu Umrüstungs- oder Reinigungszwecken.

Sowohl am Einlaß als auch vorzugsweise am Auslaß des Haupt-Strömungskanals befindet sich zweckmäßigerweise jeweils ein Anschlußstück, an dem sich eine das Druckmedium zuführende bzw. abführende Fluidleitung befestigen läßt. Insbesondere der Einlaß, vorzugsweise aber auch der Auslaß, kann ausgebildet sein, um wahlweise Anschlußstücke mit unterschiedlichen Anschlußquerschnitten installieren zu können. Wie sich herausgestellt hat, ist die Siebanordnung relativ universell einsetzbar und erfordert zur Gewährleistung ihrer Wirksamkeit keine besondere Anpassung, wenn sich die Anschlußquerschnitte und folglich die Zuströmquerschnitte des Druckmediums ändern. Somit kann ein und dieselbe Durchfluß-Meßvorrichtung problemlos ohne Austausch der Siebanordnung für unterschiedliche Anschlußquerschnitte verwendet werden.

Die Durchfluß-Messvorrichtung kann ein eigenständiges Gerät sein, kann aber auch Bestandteil einer fluidtechnischen Einrichtung sein, beispielsweise eines zur Druckluftaufbereitung dienenden Wartungsgerätes, innerhalb dessen sie zur Durchflusserfassung eingesetzt wird.

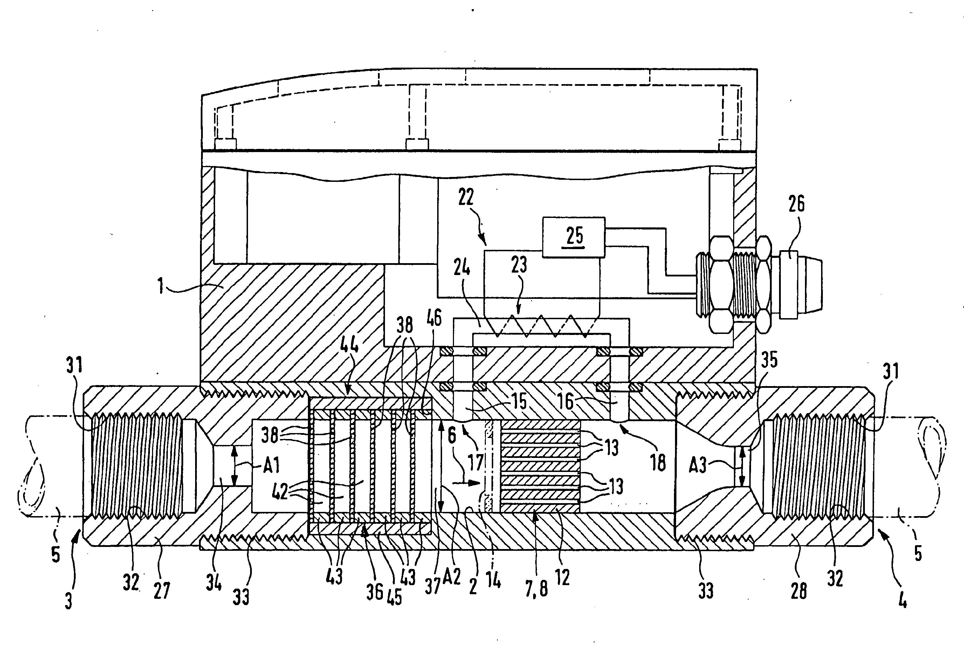

Nachfolgend wird die Erfindung anhand der beiliegenden Zeichnung näher erläutert. Die einzige Figur zeigt eine bevorzugte Ausführungsform der Durchfluß-Messvorrichtung in einem partiellen Längsschnitt.

Die in der Zeichnung abgebildete Durchfluß-Messvorrichtung verfügt über ein mehrteiliges Gehäuse 1, das von einem linearen Haupt-Strömungskanal 2 durchsetzt ist. Der Haupt-Strömungskanal 2 hat einen Einlaß 3, an dem über eine strichpunktiert angedeutete Fluidleitung 5 herangeführtes Druckmedium in den Haupt-Strömungskanal 2 eingespeist werden kann. Nach dem Hindurchströmen durch den Haupt-Strömungskanal 2 in einer durch einen Pfeil verdeutlichten Strömungsrichtung 6 tritt das Druckmedium über einen dem Einlaß 3 entgegengesetzten Auslaß 4 wieder aus dem Haupt-Strömungskanal 2 aus.

In den Haupt-Strömungskanal 2 sind Druckabfall-Erzeugungsmittel 7 eingesetzt. Sie bewirken einen Druckabfall des durch sie hindurchströmenden Druckmediums, so dass vor den Druckabfall-Erzeugungsmitteln 7 ein höherer Druck herrscht als danach.

Die Druckabfall-Erzeugungsmittel 7 sind beim Ausführungsbeispiel von einem sogenannten Laminar-Flow-Element 8 gebildet. Das Funktionsprinzip solcher Laminar-Flow-Elemente 8 beruht auf dem Gesetz von Poiseuille, welches besagt, dass sich eine Strömung in einem dünnen Rohr proportional zum Druckverlust pro Längeneinheit verhält, falls die Strömung laminar ist. Das Laminar-Flow-Element - kurz "LFE" - enthält einen im Haupt-Strömungskanal 2 fixierten Grundkörper 12, insbesondere aus Aluminium, der von einer Vielzahl zueinander paralleler, enger Kapillarkanäle 13 in der Längsrichtung des Haupt-Strömungskanals 2 durchsetzt wird.

Anstelle eines Laminar-Flow-Elementes könnte auch eine einfache Blende vorgesehen sein, wie sie in der Zeichnung strichpunktiert bei 14 neben dem LFE angedeutet ist.

Im Bereich der Druckabfall-Erzeugungsmittel 7 mündet mindestens ein erster Abgriffskanal 15 und - stromab von diesem - mindestens ein zweiter Abgriffskanal 16 umfangsseitig in den Haupt-Strömungskanal 2 ein. Beim Ausführungsbeispiel sind die beiden Abgriffkanäle 15, 16 jeweils nur einfach vorhanden.

Die beiden Abgriffskanäle 15, 16 definieren an den Stellen ihrer Einmündung in den Haupt-Strömungskanal 2 erste und zweite Meßstellen 17, 18, an denen der Haupt-Strömungskanal 2 abgegriffen wird.

Der erste Abgriffskanal 15 mündet stromauf der Druckabfall-Erzeugungsmittel 7 in den Haupt-Strömungskanal 2 ein. Die zweite Meßstelle 18, also die Einmündung des zweiten Abgriffskanals 16 in den Haupt-Strömungskanal 2, befindet sich stromab der Druckabfall-Erzeugungsmittel 7. Durch diese Anordnung läßt sich ein besonders exaktes Meßergebnis erzielen.

Insbesondere wenn als Druckabfall-Erzeugungsmittel 7 alternativ eine Düsenkontur verwendet wird, kann sich vor allem die zweite Meßstelle 18 noch innerhalb der Druckabfall-Erzeugungsmittel 7 befinden.

Unter Vermittlung der ersten und zweiten Abgriffskanäle 15, 16 sind in ihrer Gesamtheit mit Bezugsziffer 22 bezeichnete Durchfluss-Erfassungsmittel an den Haupt-Strömungskanal 2 angeschlossen.

Beim Ausführungsbeispiel enthalten die Durchfluss-Erfassungsmittel 22 eine auf kalorimetrischem Funktionsprinzip basierende Massenstrom-Sensoreinrichtung 23. Diese ist in den Verlauf eines By-pass-Kanals 24 eingeschaltet, der die beiden Abgriffskanäle 15, 16 verbindet und der eine By-pass-Strömung des Druckmediums unter Umgehung der Druckabfall-Erzeugungsmittel 7 gestattet, jedoch selber einen genau definierten Druckabfall erzeugt.
Die Massenstrom-Sensoreinrichtung 23 ermittelt den durch den im Vergleich zum Haupt-Strömungskanal 2 einen relativ kleinen Durchmesser aufweisenden By-pass-Kanal 24 strömenden Massenstrom, der in einer Auswerteeinrichtung 25 der Durchfluss-Erfassungsmittel 22 zur Strömung im Haupt-Strömungskanal 2 korreliert wird, so dass letztlich an einer mit der Auswerteeinrichtung 25 verbundenen elektromechanischen Anschlußeinrichtung 26 die gewünschten Messwerte abgegriffen werden können.

Alternativ könnten die Durchfluss-Erfassungsmittel 22 auch nach dem sogenannten Wirkdruckprinzip arbeitend ausgebildet sein. In diesem Fall wird an den beiden Meßstellen 17, 18 über die Abgriffskanäle 15, 16 lediglich der dort herrschende statische Druck abgegriffen und in einer angeschlossenen Differenzdruck-Sensoreinrichtung der Differenzdruck ermittelt. Mit Hilfe weiterer Zustandsgrößen, insbesondere Absolutdruck, Temperatur und Feuchtigkeit, wird dann in der Auswerteeinrichtung 25 der momentane Durchfluß errechnet.

Am Einlaß 3 und am Auslaß 4 des Haupt-Strömungskanals 2 ist jeweils ein einlaßseitiges bzw. auslaßseitiges Anschlußstück 27, 28 am Gehäuse 1 fixiert. Die Anschlußstücke 27, 28 ermöglichen jeweils den Anschluß einer Fluidleitung 5, über die das hinsichtlich der Durchflußrate zu messende Druckmedium zugeführt bzw. abgeführt wird. Entsprechend dem jeweiligen Anwendungszweck können dabei Fluidleitungen unterschiedlicher Durchmesser zum Einsatz kommen, zu deren Befestigung alternativ unterschiedliche Anschlußstücke 27, 28 am Gehäuse 1 fixiert werden, die über voneinander abweichende Anschlußquerschnitte 32 verfügen.

Um diese wahlweise Bestückung mit unterschiedlichen Anschlußstücken 27, 28 zu ermöglichen, sind am Gehäuse 1 und an den Anschlußstücken 27, 28 zueinander komplementäre Schnittstellen 33 vorgesehen, die eine lösbare Befestigung gestatten. Es können dann verschiedene Anschlußstücke 27, 28 bereitgestellt werden, die zwar in den Schnittstellen 33 und den weiter unten erläuterten Querschnitten A₁ und A₃ übereinstimmen, jedoch unterschiedliche Anschlußquerschnitte 32 aufweisen.

Beim Ausführungsbeispiel sind die Schnittstellen 33 als Schraub-Schnittstellen ausgebildet. Die Anschlußstücke 27, 28 werden hier in die Mündungsbereiche des Haupt-Strömungskanals 2 eingeschraubt.

Zum Befestigen der Fluidleitungen 5 in den Anschlußquerschnitten 32 der Anschlußstücke 27, 28 sind die Anschlußstücke 27, 28 beim Ausführungsbeispiel mit Anschlußgewinden 31 ausgestattet gezeigt. Hier können aber auch andere Anschlußmittel vorgesehen sein, insbesondere Steckverbindungsmittel.

Das einlaßseitige Anschlußstück 27 verfügt über einen Zuströmkanal 34, über den das Druckmedium von der angeschlossenen Fluidleitung 5 in den Haupt-Strömungskanal 2 eintritt. Sein Zuströmquerschnitt A₁ ist geringer als der Querschnitt A₂ des Haupt-Strömungskanals 2, wobei der Zuströmquerschnitt A₁ vom jeweils verwendeten Anschlußstück 27 abhängt, jedoch kleiner sein muss als der kleinste Querschnitt der Fluidleitung 5.

Letzteres gilt im übrigen auch für den Abströmquerschnitt A₃ eines im auslaßseitigen Anschlußstück 28 vorgesehenen Auslaßkanals 35, der die Verbindung zwischen dem Haupt-Strömungskanal 2 und der am auslaßseitigen Anschlußstück 28 fixierten Fluidleitung 5 herstellt.

Bedingt durch den geringen Zuströmquerschnitt A₁ tritt das Druckmedium mit einem Fluidstrahl in den Haupt-Strömungskanal 2 ein, dessen Querschnitt geringer ist als der Kanalquerschnitt A₂ des Haupt-Strömungskanals 2. Ohne besondere Maßnahmen resultiert daraus das Problem, dass das Druckmedium im Bereich der ersten Meßstelle 17 den Kanalquerschnitt des Haupt-Strömungskanals 2 nicht vollständig ausfüllt, so dass Toträume und/oder Turbulenzen auftreten, die das vom ersten Abgriffskanal 15 abgegriffene Meßsignal verfälschen.

Zur Vermeidung dieser Problematik ist den Druckabfall-Erzeugungsmitteln 7 stromauf mit Abstand eine Siebanordnung 36 vorgelagert. Diese bewirkt zum einen den Effekt, dass das hindurchströmende Druckmedium vergleichmäßigt wird und sich ein gleichmäßiges laminares Strömungsprofil ausbildet.

Ein weiterer, sehr wesentlicher Effekt der Siebanordnung 36 besteht darin, dass der vom hindurchströmenden Druckmedium eingenommene Strömungsquerschnitt auf kurzer Wegstrecke stark aufgeweitet wird. Dadurch kann erreicht werden, dass schon in dem zwischen den Druckabfall-Erzeugungsmitteln 7 und der Siebanordnung 36 befindlichen Zwischenraum 37 der gesamte Kanalquerschnitt des Hauptströmungskanals 2 vom zuströmenden Druckmedium ausgefüllt wird. Mithin kann in dem Zwischenraum 37 der gesamte Kanalquerschnitt A₂ des Haupt-Strömungskanals 2 als freier Strömungsquerschnitt konzipiert werden, in dem sich keinerlei Strömungshindernisse befinden, die das geradlinige Hindurchströmen des Druckmediums verhindern.

Bedingt durch die in dem Zwischenraum 37 erzielbare volle Kanalfüllung ist es möglich, die erste Meßstelle 17 im Bereich dieses Zwischenraumes 37 vorzusehen. Dadurch ergibt sich eine wesentliche höhere Meßgenauigkeit als bei einer Plazierung der ersten Meßstelle 17 innerhalb den Druckabfall-Erzeugungsmitteln 7.

Der geschilderte Effekt der Strömungsaufweitung hängt insbesondere mit dem speziellen Aufbau der Siebanordnung 36 zusammen. Letztere enthält eine Mehrzahl von in Längsrichtung des Haupt-Strömungskanals 2 mit Abstand aufeinanderfolgend angeordneten Siebscheiben 38 - beispielsweise fein gelochte Metallscheiben oder Drahtgitter -, wobei zwischen unmittelbar aufeinanderfolgenden Siebscheiben 38 jeweils ein Strömungs-Ausbreitungsraum 42 definiert wird, in dem das Druckmedium radial nach außen ausweichen kann.

Das Aufweiten des Strömungsquerschnittes geschieht schrittweise zunehmend vom jeweiligen Strömungsausbreitungsraum 42 zum nächsten. Somit kann der Effekt durch Auswahl einer entsprechenden Anzahl von Strömungsausbreitungsstufen beeinflußt werden. Wie sich gezeigt hat, sollten möglichst mindestens vier beabstandete Siebscheiben 38 vorgesehen sein. Als optimal hat sich nach derzeitiger Kenntnis eine Anzahl von sechs beabstandeten Siebscheiben 38 herausgestellt.

Der Strömungsausbreitungseffekt ist darauf zurückzuführen, dass durch ein Sieb die Geschwindigkeit des Druckmediums reduziert wird. Infolge dieser Geschwindigkeitsabnahme muss wegen der Kontinuitätsgleichung der Strahlquerschnitt zunehmen.

Zur Vorgabe der Abstände zwischen den einzelnen Siebscheiben 38 ist beim Ausführungsbeispiel jeweils ein Distanzring 43 zwischen jeweils aufeinanderfolgenden Siebscheiben 38 plaziert. Es ergibt sich dadurch ein Stapel von abwechselnd aufeinanderfolgend angeordneten Siebscheiben 38 und Distanzringen 43. Die Distanzringe 43 können beispielsweise eingepreßt sein, um die Siebscheiben 38 zu fixieren. Möglich ist es aber auch, Siebscheiben 38 und Distanzringe 43 lose in den Haupt-Strömungskanal 2 einzustecken und durch geeignete Sicherungsmittel, beispielsweise federelastische Sicherungsringe, an Ort und Stelle zu fixieren.
Besonders vorteilhaft ist es, wenn die Siebanordnung 36 wie beim Ausführungsbeispiel Bestandteil einer koaxial in den Haupt-Strömungskanal 2 eingesetzten Siebpatrone 44 ist. Innerhalb der Siebpatrone 44 sind die Siebscheiben 38 und Distanzringe 43 zu einer patronenartigen Baueinheit zusammengefaßt.

Beim Ausführungsbeispiel enthält die Siebpatrone 44 eine Traghülse 45, in der die Siebscheiben 38 und Distanzringe 43 fixiert sind. Die gesamte Siebpatrone 44 wird dann bei entferntem einlaßseitigem Anschlußstück 27 bis zur Anlage an einem gehäusefesten Anschlag 46 einlaßseitig in den Haupt-Strömungskanal eingesetzt. Zur Lagefixierung kann unmittelbar das einlaßseitige Anschlußstück 27 herangezogen werden, das im montierten Zustand die Siebpatrone 44 an der dem Anschlag 46 entgegengesetzten Stirnseite flankiert.

Die Umrüstung der Messvorrichtung auf ein anderes Anschlußstück 27 kann erfolgen, ohne dass gleichzeitig auch die Sieb-anordnung 36 bzw. die Siebpatrone 44 ausgetauscht werden müßte. Wie sich bei Versuchen gezeigt hat, ist der Strömungsausbreitungseffekt ziemlich unabhängig vom jeweiligen Zuströmquerschnitt A₁, so dass sich die Durchfluß-Messvorrichtung einfach und kostengünstig zur Erfassung unterschiedlicher Strömungsraten umrüsten läßt.

Der dem Druckmedium beim Hindurchströmen durch die Siebanordnung 36 zur Verfügung gestellt Strömungsquerschnitt entspricht zweckmäßigerweise dem auch in dem Zwischenraum 37 vorliegenden Kanalquerschnitt A₂.

Durch die Verwendung der Siebanordnung 36 kann die Kanallänge, innerhalb der sich der Strömungsstrahl bis zum maximalen Kanalquerschnitt ausweitet, erheblich verkürzt werden. Die Düsenwirkung durch das vorgeschaltete Anschlußstück 27 bzw. dessen Zuströmkanal 34 kann trotz kurzer Baulänge effektiv eliminiert werden. Gleichfalls eliminiert werden eventuell vorhandene Dralleffekte der Strömung oder die Tendenz der Strömung, an einer Seite der Kanalwandung anzuhaften. Somit kann die Durchfluß-Messvorrichtung problemlos auch in Verbindung mit einlaßseitigen Anschlußstücken 27 betrieben werden, die als Winkelstücke ausgebildet sind und bei denen der in den Haupt-Strömungskanal 2 eintretende Strömungsstrahl bevorzugt an nur einer Seite der Kanalwandung konzentriert auftritt.

Der geschilderte Effekt der Verbreiterung der Strömung tritt auch schon bei einer geringeren Anzahl von Siebscheiben 38 als abgebildet ein. Er ist dann allerdings unter Umständen noch nicht optimal ausgeprägt, so dass zur Kompensation eine geringfügige Verlängerung des Zwischenraumes 37 erforderlich sein kann.

Die beispielhaft gezeigte Durchfluß-Messvorrichtung ist universell zur Durchflußmessung einsetzbar. Allerdings sind auch Bauformen möglich, bei denen die Durchfluß-Messvorrichtung als unmittelbarer Bestandteil einer fluidtechnischen Einrichtung ausgebildet ist, in der zu Steuerungs- oder Diagnosezwecken eine Durchflußmessung vorteilhaft ist. Als Beispiel für eine solche fluidtechnische Einrichtung kann ein zur Druckluftaufbereitung dienendes Wartungsgerät genannt werden.

## Patentansprüche

1. Durchfluß-Messvorrichtung, bei der in einem mit einem Einlaß (3) und einem Auslaß (4) versehenen Haupt-Strömungskanal (2) einen Druckabfall des hindurchströmenden Druckmediums hervorrufende Druckabfall-Erzeugungsmittel (7) vorgesehen sind, wobei in den Haupt-Strömungskanal (2) zum Anschließen von Durchfluß-Erfassungsmitteln (22) im Bereich der Druckabfall-Erzeugungsmittel (7) mindestens ein erster Abgriffskanal (15) und stromab von diesem mindestens ein zweiter Abgriffskanal (16) einmündet und wobei den Druckabfall-Erzeugungsmitteln (7) stromauf mit Abstand eine zur Vergleichmäßigung der Druckmedium-Strömung dienende Siebanordnung (36) vorgelagert ist, wobei in dem Zwischenraum (37) zwischen der Siebanordnung (36) und den Druckabfall-Erzeugungsmitteln (7) ein über den gesamten Kanalquerschnitt freier Strömungsquerschnitt des Haupt-Strömungskanals (2) vorgesehen ist,
**dadurch gekennzeichnet, dass** die Siebanordnung (36) mehrere in Längsrichtung des Haupt-Strömungskanals (2) mit Abstand aufeinanderfolgend angeordnete Siebscheiben (38) enthält.

2. Durchfluß-Messvorrichtung nach Anspruch 1, **dadurch gekennzeichnet, dass** der erste Abgriffskanal (15) stromauf vor den Druckabfall-Erfassungsmitteln (7) in den Haupt-Strömungskanal (2) einmündet.

3. Durchfluß-Messvorrichtung nach Anspruch 1 oder 2, **dadurch gekennzeichnet, dass** die ersten und zweiten Abgriffskanäle (15, 16) stromauf und stromab der Druckabfall-Erzeugungsmittel (7) in den Haupt-Strömungskanal (2) einmünden.

4. Durchfluß-Messvorrichtung nach einem der Ansprüche 1 bis 3, **dadurch gekennzeichnet, dass** die Druckabfall-Erzeugungsmittel (7) von einer Blende (14) gebildet sind.

5. Durchfluß-Messvorrichtung nach einem der Ansprüche 1 bis 4, **dadurch gekennzeichnet, dass** die Druckabfall-Erzeugungsmittel (7) von einem Laminar-Flow-Element (LFE) gebildet sind.

6. Durchfluß-Messvorrichtung nach einem der Ansprüche 1 bis 5, **dadurch gekennzeichnet, dass** die Durchfluß-Erfassungsmittel (22) eine Differenzdruck-Sensoreinrichtung enthalten.

7. Durchfluß-Messvorrichtung nach einem der Ansprüche 1 bis 5, **dadurch gekennzeichnet, dass** die Durchfluß-Erfassungsmittel (22) eine auf kalorimetrischem Funktionsprinzip basierende Massenstrom-Sensoreinrichtung (23) enthalten.

8. Durchfluß-Messvorrichtung nach einem der Ansprüche 1 bis 7, **dadurch gekennzeichnet, dass** die Siebanordnung (36) mindestens vier beabstandete Siebscheiben (38) enthält.

9. Durchfluß-Messvorrichtung nach einem der Ansprüche 1 bis 8, **dadurch gekennzeichnet, dass** die Siebanordnung (36) sechs beabstandete Siebscheiben (38) enthält.

10. Durchfluß-Messvorrichtung nach einem der Ansprüche 1 bis 9, **dadurch gekennzeichnet, dass** zwischen unmittelbar aufeinanderfolgenden Siebscheiben (38) jeweils ein den Abstand vorgebender Distanzring (43) angeordnet ist.

11. Durchfluß-Messvorrichtung nach einem der Ansprüche 1 bis 10, **dadurch gekennzeichnet, dass** die Siebanordnung (36) Bestandteil einer koaxial in den Haupt-Strömungskanal (2) eingesetzten Siebpatrone (44) ist.

12. Durchfluß-Messvorrichtung nach einem der Ansprüche 1 bis 11, **gekennzeichnet durch** ein am Einlaß (3) und/oder am Auslaß (4) des Haupt-Strömungskanals (2) angeordnetes, das Anschließen einer Fluidleitung (5) ermöglichendes Anschlußstück (27, 28).

13. Durchfluß-Messvorrichtung nach Anspruch 12, **dadurch gekennzeichnet, dass** der Einlaß (3) und/oder der Auslaß (4) zur wahlweisen Installation von Anschlußstücken (27, 28) mit unterschiedlichen Anschlußquerschnitten (32) ausgebildet ist unter Beibehaltung ein und derselben Siebanordnung (36).

14. Durchfluß-Messvorrichtung nach einem der Ansprüche 1 bis 13 als Bestandteil einer fluidtechnischen Einrichtung, beispielsweise eines zur Druckluftaufbereitung dienenden Wartungsgerätes.

15. Durchfluß-Messvorrichtung nach einem der Ansprüche 1 bis 14, **dadurch gekennzeichnet, dass** die Siebscheiben (38) von gelochten Metallscheiben gebildet sind.

## Claims

1. Flow metering device wherein pressure drop generating means (7) causing a pressure drop of the pressure fluid passing through are provided in a main flow passage (2) having an inlet (3) and an outlet (4), wherein at least one first branch passage (15) and downstream thereof at least one second branch passage (16) terminate in the main flow passage (2) for connecting flow detection devices (22) in the region of the pressure drop generating means (7) and wherein a screen arrangement (36) is provided at a distance upstream of the pressure drop generating means (7) for evening out the flow of pressure fluid,
a free flow cross-section being provided over the entire cross-section of the passage in the space (37) between the screen arrangement (36) and the pressure drop generating means (7),
**characterised in that** the screen arrangement (36) comprises a plurality of disc screens (38) spaced in the longitudinal direction of the main flow passage (2).

2. Flow metering device according to claim 1, **characterised in that** the first branch passage (15) terminates in the main flow passage (2) upstream of the pressure drop detection means (7).

3. Flow metering device according to claim 1 or 2, **characterised in that** the first and second branch passages (15, 16) terminate in the main flow passage (2) upstream and downstream of the pressure drop generating means (7).

4. Flow metering device according to any of claims 1 to 3, **characterised in that** the pressure drop generating means (7) are represented by an orifice (14).

5. Flow metering device according to any of claims 1 to 4, **characterised in that** the pressure drop generating means (7) are represented by a laminar flow element (LFE).

6. Flow metering device according to any of claims 1 to 5 **characterised in that** the flow detection means (22) comprise a differential pressure sensing device.

7. Flow metering device according to any of claims 1 to 5, **characterised in that** the flow detection means (22) comprise a mass flow sensing device (23) based on a calorimetric principle.

8. Flow metering device according to any of claims 1 to 7, **characterised in that** the screen arrangement (36) comprises at least four spaced disc screens (38).

9. Flow metering device according to any of claims 1 to 8, **characterised in that** the screen arrangement (36) comprises six spaced disc screens (38).

10. Flow metering device according to any of claims 1 to 9, **characterised in that** spacer rings (43) predetermining the spacing are provided between consecutive disc screens (38).

11. Flow metering device according to any of claims 1 to 10, **characterised in that** the screen arrangement (36) is part of a screen cartridge (44) installed coaxially into the main flow passage (2).

12. Flow metering device according to any of claims 1 to 11, **characterised by** a connector (27, 28) provided at the inlet (3) and/or at the outlet (4) of the main flow passage (2) for the connection of a fluid line (5).

13. Flow metering device according to claim 12, **characterised in that** the inlet (3) and/or the outlet (4) is/are provided with different port cross-sections (32) for the optional installation of connectors (27, 28) while one and the same screen arrangement (36) is maintained.

14. Flow metering device according to any of claims 1 to 13 as a component of a fluid power device such as a device for the conditioning of compressed air.

15. Flow metering device according to any of claims 1 to 14, **characterised in that** the disc screens (38) are represented by perforated metal discs.

## Revendications

1. Débitmètre, dans lequel dans un canal d'écoulement principal (2) pourvu d'une admission (3) et d'une évacuation (4), des moyens de génération de chute de pression (7) suscitant une chute de pression du fluide sous pression s'écoulant sont prévus, dans le canal d'écoulement principal (2) pour le raccordement de moyens de détection du débit (22) dans la zone des moyens de génération de chute de pression (7) débouchant au moins un premier canal de prélèvement (15) et en aval de celui-ci au moins un second canal de prélèvement (16) et en amont des moyens de génération de chute de pression (7) étant monté à distance un ensemble de tamisage (36) servant à l'uniformisation de l'écoulement de fluide sous pression,
une section d'écoulement libre sur la section de canal entière du canal d'écoulement principal (2) étant prévue dans l'espace intermédiaire (37) entre l'ensemble de tamisage (36) et les moyens de génération de chute de pression (7),
**caractérisé en ce que** l'ensemble de tamisage (36) contient plusieurs disques de tamisage (38) disposés consécutivement à distance dans le sens longitudinal du canal d'écoulement principal (2).

2. Débitmètre selon la revendication 1, **caractérisé en ce que** le premier canal de prélèvement (15) débouche en amont des moyens de détection de chute de pression (7) dans le canal d'écoulement principal (2).

3. Débitmètre selon la revendication 1 ou 2, **caractérisé en ce que** les premier et second canaux de prélèvement (15, 16) débouchent en amont et en aval des moyens de génération de chute de pression (7) dans le canal d'écoulement principal (2).

4. Débitmètre selon l'une des revendications 1 à 3, **caractérisé en ce que** les moyens de génération de chute de pression (7) sont formés par un diaphragme (14).

5. Débitmètre selon l'une des revendications 1 à 4, **caractérisé en ce que** les moyens de génération de chute de pression (7) sont formés par un élément à flux laminaire (LFE).

6. Débitmètre selon l'une des revendications 1 à 5, **caractérisé en ce que** les moyens de détection de débit (22) contiennent un dispositif de détection de pression différentielle.

7. Débitmètre selon l'une des revendications 1 à 5, **caractérisé en ce que** les moyens de détection de débit (22) contiennent un dispositif de détection de débit massique (23) basé sur le principe fonctionnel calorimétrique.

8. Débitmètre selon l'une des revendications 1 à 7, **caractérisé en ce que** l'ensemble de tamisage (36) contient au moins quatre disques de tamisage (38) espacés.

9. Débitmètre selon l'une des revendications 1 à 8, **caractérisé en ce que** l'ensemble de tamisage (36) contient six disques de tamisage (38) espacés.

10. Débitmètre selon l'une des revendications 1 à 9, **caractérisé en ce qu'**une bague d'écartement (43) prescrivant la distance est disposée chaque fois entre des disques de tamisage (38) directement consécutifs.

11. Débitmètre selon l'une des revendications 1 à 10, **caractérisé en ce que** l'ensemble de tamisage (36) fait partie d'une cartouche de tamisage (44) insérée coaxialement dans le canal d'écoulement principal (2).

12. Débitmètre selon l'une des revendications 1 à 11, **caractérisé par** une pièce de raccordement (27, 28) permettant le raccordement d'une conduite fluidique (5), disposée sur l'admission (3) et/ou sur l'évacuation (4) du canal d'écoulement principal (2).

13. Débitmètre selon la revendication 12, **caractérisé en ce que** l'admission (3) et/ou l'évacuation (4) est réalisée pour l'installation au choix de pièces de raccordement (27, 28) avec différentes sections de raccordement (32) en conservant un seul et même ensemble de tamisage (36).

14. Débitmètre selon l'une des revendications 1 à 13, en tant que constituant d'un dispositif fluidique, par exemple d'un appareil de maintenance servant à la préparation de l'air comprimé.

15. Débitmètre selon l'une des revendications 1 à 14, **caractérisé en ce que** les disques de tamisage (38) sont formés par des disques métalliques perforés.
